Europäisches Patentamt

European Patent Office

Office européen des brevets

Publication number: **0 296 604**

**A2**

# EUROPEAN PATENT APPLICATION

(21) Application number: 88110087.9

(51) Int. Cl.⁴: **B32B 3/12**

(22) Date of filing: 24.06.88

(30) Priority: 26.06.87 FI 872837

(43) Date of publication of application:
**28.12.88 Bulletin 88/52**

(84) Designated Contracting States:
**AT CH DE ES FR GB IT LI SE**

(71) Applicant: **OY FLIPPER BOATS AB**

**SF-21660 Nauvo(FI)**

(72) Inventor: **Ölander, Bjarne**

**SF 21660 Nauvo(FI)**

(74) Representative: **Eisenführ & Speiser**
**Martinistrasse 24**
**D-2800 Bremen 1(DE)**

(54) Board material and process for the manufacture of same.

(57) Board material and process for the manufacture of same. The board material consists of two surface layers and of a honeycomb structure placed between them. The direction of the cell walls (1,2) in the honeycomb structure forms an angle relative the direction of the surface layers. The honeycomb structure is composed of an originally porous material saturated with resin. Most appropriately, the honeycomb structure consists of corrugated fibreboard, whereat the cardboard layers (1,2) in the corrugated fibreboard are substantially perpendicular to the surface layers in the board material.

Fig. 2

## Board material and process for the manufacture of same

The present invention concerns a board material consisting of two surface layers and a honeycomb structure placed between them, whereat the direction of the cell walls in the honeycomb structure forms an angle relative the direction of the surface layers. The invention also concerns a process for the manufacture of the board material.

Among other things, as construction material for boats, it is known in prior art to use various sandwich structures. In these structures, between the surface layers, e.g., balsa or foam plastic, such as polyvinylchloride or polyurethane foam, has been used.

E.g., from the Finnish Patent No. 31,483, a honeycomb structure is also known which consists of densely packed cells of hexagonal section. The honeycomb structure is intended for use as filler material in construction units covered from both sides. It is not described in more detail how the surface boards are fixed to the honeycomb structure.

Now a board material has been invented wherein a honeycomb structure is placed between surface layers of reinforced plastic, the ends of the cells in said honeycomb structure being placed against the surface layers.

The invention is characterized in that the honeycomb structure consists of an originally porous material saturated with hardening resin. Most appropriately, the honeycomb structure consists of corrugated fibreboard, whereat the cardboard layers in the corrugated fibreboard are placed substantially perpendicularly to the surface layers of the board material. The process in accordance with the invention is characterized in that a layer of resin is spread onto the face of a mould, into which said layer the honeycomb structure is placed before the resin becomes dry; and a second layer of resin is spread onto the opposite side of the honeycomb structure. The amount of resin that is used is large enough so that resin can be absorbed into the walls of the honeycomb structure to saturate them with resin.

When the resin absorbed into the porous walls hardens, a rigid and very strong, continuous structure is formed, wherein the surface layers also adhere to the honeycomb structure very firmly.

When a honeycomb structure is used wherein the cell walls are substantially perpendicular to the surface of the board material and when such a honeycomb structure is saturated with resin, it is possible to bend the board around two or more axes of different directions. After hardening of the resin, the board remains rigid in this shape, so that it is well suitable for the manufacture of curved three-dimensional faces of different forms.

The product is highly advantageous as compared with the prior-art sandwich structures; its cost is only about one tenth of their cost. The finished board is of low weight and, at the same time, strong. Since the cells are closed, the board insulates heat very well. Being saturated, the porous honeycomb structure does not absorb moisture either.

The board is in particular suitable for constructions of reinforced plastic, whereat, in addition to the resin, some reinforcement material suitable for the purpose is used in the surface layers.

The board is suitable for use, e.g., as material for boats, as construction board in self-supporting structures, as a heat-insulation board, e.g., in ceilings, as well as for packages.

The invention and its details will be described in more detail in the following with reference to the accompanying drawing, wherein

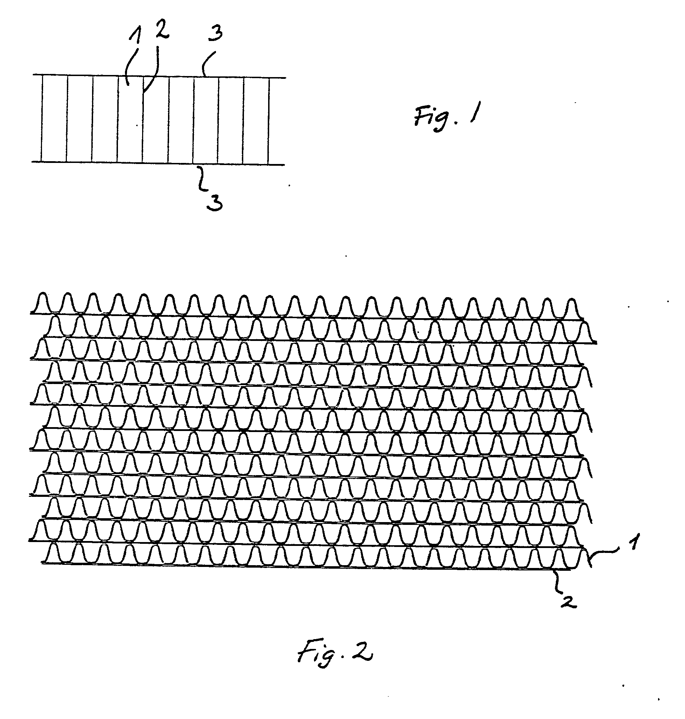

Figure 1 is a side view of a board material in accordance with the invention, and

Figure 2 is a top view of a honeycomb structure used in the board material.

The honeycomb structure consists of corrugated cardboard, i.e. fluting 1, and of uncorrugated cardboard, i.e. facing 2.

By means of the machines known at present, corrugated fibreboard can be manufactured so that it has 1 to 5 fluting layers 1 and an equal number of facing layers 2. The honycomb structure is manufactured by glueing several corrugated fibreboards one onto the other to make a thick block. Thereupon, out of such a block, "slices" are cut-off so that the cutting plane is perpendicular to the longitudinal direction of the flute tubes.

The manufacture of the board material in accordance with the invention takes place so that a layer of resin 3 and, if desired, reinforcement material are spread onto a mould face of desired shape, either plane or curved. Before the resin hardens, "slices" described above are pressed into the resin layer so that the longitudinal direction of the flute tubes is substantially perpendicular to the mould face and to the resin layer 3. A second mould face, onto which resin and possibly reinforcement material have been spread likewise, is placed onto the layers formed by the "slices", likewise before hardening of the resin. The as yet unhardened resin is absorbed into the porous cardboard in the honeycomb structure. On hardening, the resin rigidifies the whole board structure, and the mould faces can be removed.

The resin used for the saturation is most appropriately polyester resin, but it is also possible to use, e.g., epoxy resin. The maximum thickness of a board is determined by the absorption of the resin into the honeycomb structure from two directions. If necessary, the absorption can be promoted by diluting the resin, by using a difference in pressure, or by increasing the porousity of the cardboard. The thickness of the board may be 10 to 40 mm, or even more.

The strength of the board is determined by the resin that is used; the function of the honeycomb structure of cardboard is just to act as a framework for the formation of the resin honeycomb and for keeping the surface boards at an appropriate distance from each other.

In stead of cardboard, it is also possible to use some other porous material, e.g. non-woven fabric, in the honeycomb structure. The honeycomb structure may also be formed in some other way except by means of corrugated fibreboard; it is possible to use, e.g., paper tubes glued together and running perpendicularly to the face of the finished board. It is also possible to use other honeycomb structures in themselves known.

## Claims

1. Board material consisting of two surface layers (3) and a honeycomb structure placed between them, whereat the direction of the cell walls (1,2) in the honeycomb structure forms an angle relative the direction of the surface layers (3), **characterized** in that the honeycomb structure (1,2) consists of an originally porous material saturated with hardening resin.

2. Board material as claimed in claim 1, **characterized** in that the honeycomb structure consists of corrugated fibreboard, whereat the cardboard layers (1,2) in the corrugated fibreboard are placed substantially perpendicularly to the surface layers (3) of the board material.

3. Process for the manufacture of a board material, wherein a honeycomb structure is fixed between two surface layers (3) so that the direction of the walls (1,2) in the honeycomb forms an angle relative the surface layer, **characterized** in that onto a mould face a resin layer (3) is spread, into which the honeycomb structure (1,2) is placed before hardening of the resin; and a second resin layer (3) is spread onto the opposite side of the honeycomb structure.

4. Process as claimed in claim 3, **characterized** in that the resin layers (3) are spread onto curved mould faces and the honeycomb structure (1,2) is bent in accordance with the curved mould faces.

Fig. 1

Fig. 2